# EUROPÄISCHE PATENTSCHRIFT

(11) **EP 2 213 558 B1**
(45) Veröffentlichungstag und Bekanntmachung des Hinweises auf die Patenterteilung: **13.07.2011**
(21) Anmeldenummer: 10150856.2
(22) Anmeldetag: 15.01.2010
(51) Int. Cl.: B62J 11/00

(54) **Helmhalterung für Fahrräder**
Helmet fixing device for bicycles
Support de casque pour bicyclettes

(30) Priorität: 28.01.2009 CH 1272009
(43) Veröffentlichungstag der Anmeldung: 04.08.2010
(73) Patentinhaber: Stiftung Brändi, 6011 Kriens (CH)
(72) Erfinder: van Spijk, Piet, CH-6003, Luzern (CH); Berchtold, Tobias, CH-6056 Kägiswil (CH); Lüthi, Ernst, CH-4805, Brittnau (CH)
(74) Vertreter: Rutz & Partner

(56) Entgegenhaltungen:
- EP-B1- 1 064 190
- CA-A1- 2 132 996
- DE-U1-202007 003 401
- US-A- 3 798 934

## Beschreibung

Die Erfindung betrifft eine dem Halten eines Helms dienende Halterung für Fahrräder nach dem Oberbegriff des Patentanspruchs 1.

Aus der EP 1 064 190 B1 ist eine an einem Rahmenrohr montierbare Halterung für einen Fahrradhelm bekannt, dessen Helmschale eine durchgehende Helmöffnung aufweist. Diese Halterung umfasst ein am Rahmenrohr befestigbares und mit einem Schlüssel bedienbares Schloss sowie ein Schlosselement, welches einen ersten kurzen Schenkel und einen zweiten langen Schenkel aufweist, die etwa 90° relativ zueinander geneigt sind und an deren Enden je ein Schlosskopf vorgesehen ist. Zur Befestigung des Helms wird der lange zweite Schenkel des Schlosselements durch die Helmöffnung hindurch geführt und mit dessen Schlosskopf in dem am Rahmenrohr montierten Schloss gesichert. Der Helm ist in der Folge zwischen dem Rahmenrohr und dem kurzen ersten Schenkel des Schlosselements gehalten, die annähernd parallel zueinander verlaufen. Sofern der Helm getragen wird, wird das Schlosselement mit dem Schlosskopf des kurzen ersten Schenkels in das Schloss eingeführt, so dass das Schlosselement mit dem langen zweiten Schenkel nahe am Rahmenrohr gehalten ist.

Nachteilig bei dieser Halterung ist, dass der Anwender Manipulationen mit dem zweischenkligen Schlosselement ausführen und dieses bei der Befestigung des Helms nicht nur einseitig halten, sondern auf der anderen Seite mit dem am langen zweiten Schenkel vorgesehenen Schlosskopf in das Schloss einführen muss, welches durch den Helm abgedeckt wird. Eine Einführung des Schlosskopfs in das Schloss ist daher kaum möglich, wenn nicht die zweite Hand zu Hilfe genommen und der Schlosskopf durch Abtasten in die Aufnahmeöffnung des Schlosses eingeführt wird. Nachteilig ist ferner, dass das Schlosselement während der Benutzung des Fahrrads und des Tragens des Helms störend in Erscheinung treten kann. Dabei ist zu beachten, dass das Schlosselement nur durch den Schlosskopf des kurzen ersten Hebels gehalten wird. Sofern der Schlosskopf eine Rundform aufweist, ist dieser innerhalb des Schlosses drehbar, so dass der lange erste Schenkel seitlich kippen und den Radfahrer behindern kann. Zur Vermeidung dieses Problems wären ein speziell ausgestalteter Schlosskopf und ein entsprechendes Schloss erforderlich, was jedoch mit entsprechendem Aufwand verbunden ist. Weiterhin ist nachteilig, dass das speziell für diese Vorrichtung angefertigte Schloss stets der Witterung ausgesetzt ist und entsprechend geschützt werden muss.

Der vorliegenden Erfindung liegt daher die Aufgabe zugrunde, eine verbesserte Halterung für ein Fahrrad anzugeben, mittels der ein Helm befestigt und sicher gehalten werden kann.

Insbesondere ist eine einfach aufgebaute Halterung anzugeben, die bequem auch nur mit einer Hand bedient werden kann.

Ferner soll die Halterung während der Fahrt nicht störend in Erscheinung treten können.

Weiterhin wäre es wünschenswert, wenn das zur Befestigung des Helms verwendete Schloss gegen Witterung geschützt werden kann, wenn es zur Befestigung des Helms nicht benötigt wird.

Weiterhin wäre es wünschenswert, wenn die Halterung kostengünstiger hergestellt werden könnte.

Diese Aufgabe wird mit der in Anspruch 1 angegebenen Halterung gelöst. Vorteilhafte Ausgestaltungen der Erfindung sind in weiteren Ansprüchen angegeben.

Die für die Montage an einem Fahrrad vorgesehene Halterung dient der Befestigung eines Helms, der eine Helmöffnung aufweist, durch die hindurch ein Schlosselement führbar ist, welches mit einem ersten Schlosskopf versehen ist, der zur Sicherung des Helms in ein Schloss einführbar ist.

Erfindungsgemäss ist ein mit einem Rahmenrohr des Fahrrads verbindbarer Montagekörper vorgesehen, der mit dem stabförmigen und nur aus einem Schenkel bestehenden Schlosselement derart gelenkig verbunden ist, dass das Schlosselement zumindest annähernd parallel sowie zumindest annähernd senkrecht zum Rahmenrohr ausgerichtet werden kann. Das Schloss ist mobil und mit einer Aufnahmeöffnung versehen, in die der am freien Ende des Schlosselements vorgesehene erste Schlosskopf einführbar ist.

Mit Ausnahme des mobilen Schlosses, das nur geringe Abmessungen aufweist, sind daher alle Vorrichtungsteile mit dem Montagekörper und somit mit dem Rahmenrohr des Fahrrads verbunden. Vom Anwender ist daher nur das Schloss zu tragen, welches von der Halterung entfernt und in einem geschützten Raum gelagert oder, in einer vorzugsweisen Ausgestaltung der Halterung, auch dann mit dieser verbunden werden kann, wenn der Helm nicht an der Halterung befestigt ist.

Das Schlosselement weist nur einen Schenkel auf und ist gelenkig mit dem Montagekörper verbunden. Anstelle eines zweischenkligen Gestänges wird als Schlosselement somit nur ein einfacher Verschlussstab verwendet, der zudem mit der Halterung gelenkig verbunden ist. Vorzugsweise ist das Schlosselement derart gelagert, dass es nur zwischen zwei Lagen drehbar ist, in denen es entweder senkrecht oder parallel zum Rahmenrohr ausgerichtet ist.

Die für die Montage des Helms erforderliche Drehung in die Lage senkrecht zum Rahmenrohr kann mittels einer einfachen Handbewegung sekundenschnell erfolgen und mittels Schwerkraft oder mittels der Kraft einer Feder, beispielsweise einer Spiralfeder, unterstützt werden. Manipulationen an einem voluminösen Körper bzw. einem zweischenkligen Gestänge entfallen. Das Aufsetzen des Schlosses auf den durch den Helm hindurch getretenen Schlosskopf des Schlosselements kann einfach und bequem mit nur einer Hand durchgeführt werden. Dabei wird der Helm bereits durch das Schlosselement und somit durch die Halterung selbst getragen. Bei der Verbindung des betreffenden Schlosskopfs mit dem Schloss sind daher nicht das Schlosselement und der Helm zu halten, sondern nur das Schloss. Das Schloss und der darin einzuführende Schlosskopf sind dabei gut sichtbar und nicht durch den Helm verdeckt, weshalb die Verbindung fast reflexartig erstellt werden kann.

Ebenso einfach erfolgt die Entnahme des Helms. Dazu wird das Schloss gelöst, der Helm vom Schlosselement abgezogen und das Schlosselement wieder parallel zum Rahmenrohr ausgerichtet, was wahlweise wiederum durch die Schwerkraft oder die Kraft einer Spiralfeder, unterstützt werden kann. Mittels der Spiralfeder kann das Schlosselement daher, nach Wunsch des Anwenders, automatisch in die erste oder in die zweite Lage gedreht werden. Vorzugsweise wird eine Spiralfeder verwendet, die dementsprechend auf zwei verschiedene Arten montiert werden kann, in der sie die erste oder die zweite Bewegung des Schlosselements unterstützt.

Vorzugsweise sind weitere Federelemente oder Rastelemente vorgesehen, durch die das Schlosselement in der ersten oder zweiten Lage parallel oder senkrecht zum Rahmenrohr derart fixierbar ist bzw. einrastet, dass dieses nur unter Krafteinwirkung wieder gelöst werden kann. Auf diese Weise wird bewirkt, dass das Schlosselement immer in einer gewünschten Lage präzise gehalten ist.

Aufgrund der Mobilität des Schlosses kann dieses fast beliebig ausgestaltet werden. Da das Schloss nicht direkt mit der Struktur des Fahrrads, sondern mit der Halterung bzw. dem Schlosskopf des Schlosselements zu verbinden ist, muss das Gehäuse des Schlosses nicht mit Montageelementen versehen werden. Es kann daher ein Schloss verwendet werden, das lediglich zur Aufnahme und zum Halten eines Schlosskopfs geeignet ist. Vorzugsweise wird ein mobiles Schloss mit einem Schnappverschluss verwendet, welcher den durch die Aufnahmeöffnung eintretenden Schlosskopf automatisch erfasst und sichert.

Bekannte Schlösser dieser Art werden in hohen Stückzahlen und in hoher Qualität gefertigt, sind jedoch mit einem weiteren Vorrichtungsteil, beispielsweise einem Sicherungsriemen verbunden. Für die erfindungsgemässe Halterung wird daher ein Schloss bestellt, welches nicht mit einem zusätzlichen Vorrichtungsteile verbunden ist. Der Lieferant kann daher von den in hohen Stückzahlen gefertigten Schlössern eine vereinfachte Serie herstellen, welche nur die Verschlussvorrichtung umfasst.

Aufgrund der einfachen Ausgestaltung des Schlosses können hochwertige Materialien und ein dicht abschliessendes Gehäuse verwendet werden, welches die Verschlussvorrichtung gegen Witterungseinflüsse zuverlässig schützt. Trotz der Vorteile dieses marktüblichen Schlosses, liegen dessen Kosten um ein Mehrfaches unter den Kosten eines Schlosses, welches speziell angefertigt und mit Montageelementen versehen werden muss. Wesentlich ist ferner, dass das Schloss das kritischste Teil der Halterung ist und am ehesten einen Mangel erfahren kann. Sofern trotz der guten Qualität des Schlosses ein Mangel auftritt, muss nicht eine Verbindung mit dem Fahrrad mit relativ viel Aufwand gelöst werden, sondern es kann einfach ein zweites mobiles Schloss verwendet werden, welches beim Händler günstig erworben werden kann. Vorzugsweise wird die erfindungsgemässe Halterung mit zwei Schlössern geliefert, so dass die einwandfreie Funktion der Halterung auch dann über Jahre garantiert werden kann, wenn eines der Schlösser ausfallen sollte.

Das mobile Schloss, das beispielsweise als Schlüsselanhänger dienen kann, weist vorzugsweise die Form eines Zylinders oder eines Fasses auf, in dessen Mantelfläche die Aufnahmeöffnung vorgesehen ist. Sofern das Schloss zur Betätigung mit einem Schlüssel vorgesehen ist, so ist das Schlüsselloch vorzugsweise seitlich bzw. an den Grundflächen der Zylinderform vorgesehen. Alternativ kann ein Schnappschloss verwendet werden, welches jeweils unter Krafteinwirkung auf den Schlosskopf aufgesetzt und von diesem wieder entfernt werden kann. Diese Variante dürfte von Sportlern bevorzugt werden, die an einer sehr schnellen Befestigung und Entnahme des Helms und nicht an einer Diebstahlsicherung interessiert sind. Dabei ist natürlich darauf zu achten, dass die erforderliche Krafteinwirkung derart hoch bemessen wird, dass ein selbsttätiges Lösen des Schlosses verhindert wird. Besonders vorteilhaft ist, dass bei der erfindungsgemässen Lösung beide Varianten durch Wahl bzw. Austausch des betreffenden Schlosses leicht realisierbar sind.

Die gelenkige Lagerung des Schlosselements erfolgt vorzugsweise mittels einer Lagerwelle, die beispielsweise zwischen zwei Flügelelementen gehalten ist, die eine beispielsweise U-Profil-förmige Ausnehmung begrenzen. Die Lagerwelle wird vorzugsweise senkrecht zum Rahmenrohr ausgerichtet, so dass das Schlosselement innerhalb einer Ebene drehbar ist, in der auch das Rahmenrohr liegt.

In einer besonders bevorzugten Ausgestaltung der Erfindung ist der Montagekörper mit einem zweiten Schlosskopf versehen, auf den das Schloss aufsetzbar ist, wenn der Helm entnommen und das Schlosselement parallel zum Rahmenrohr ausgerichtet wurde. Diese Ausgestaltung der Erfindung erlaubt es dem Anwender, das zur Befestigung des Helms momentan nicht benötigte Schloss an der Halterung zu deponieren. Das Schloss kann daher auf die Haltung aufgesetzt werden und ist gleichzeitig gegen unbefugte Entnahme gesichert.

Der Bereich des Montagekörpers, in dem der zweite Schlosskopf gehalten ist, ist vorzugsweise formschlüssig an das vorzugsweise zylinderförmige Schloss angepasst, so dass dieses nach der Befestigung praktisch spielfrei gehalten ist und mit dem Montagekörper optisch eine Einheit bildet.

In einer weiteren vorzugsweisen Ausgestaltung ist das Schlosselement mit einem der Aufnahme der Lagerwelle dienenden Lagerkörper versehen, dessen dem ersten Schlosskopf abgewandter Endbereich ebenfalls formschlüssig an das Schloss angepasst und derart dimensioniert ist, dass das Schlosselement in der Lage parallel zum Rahmenrohr durch das auf den Montagekörper aufgesetzte Schloss gehalten wird. In dieser Ausgestaltung ist berücksichtigt, dass das Schlosselement nach dem Aufsetzen des Schlosses auf den zweiten Schlosskopf für die Montage des Helms nicht benötigt wird und daher parallel zum Rahmenrohr ausgerichtet sein soll. Dies wird dadurch besonders einfach erzielt, indem das deponierte Schloss selbst das Schlosselement in dieser passiven Lage fixiert.

Die Vorrichtungsteile der Halterung können aus Metall, vorzugsweise Leichtmetall, oder Kunststoff gefertigt werden. Soweit die beschriebenen Funktionen erfüllt werden, können die Vorrichtungsteile beliebig gestaltet werden. Vorzugsweise werden jedoch möglichst einfache Formen gewählt. Das Schlosselement umfasst beispielsweise ein gerades Metallrohr, in das an einer Seite der erste Schlosskopf und auf der anderen Seite der zur Lagerwelle korrespondierende Lagerkörper eingesetzt, beispielsweise eingedreht ist.

Nachfolgend wird die Erfindung anhand von Zeichnungen näher erläutert. Dabei zeigt:
- Fig. 1: eine erfindungsgemässe Halterung 1 mit einem an einem Rahmenrohr 8 befestigten Montagekörper 2, durch den ein einschenkliges Schlosselement 4 gelenkig, in einer ersten Lage senkrecht zum Rahmenrohr gehalten ist und mit einem mobilen
- Fig. 2: Schloss 6, welches eine Aufnahmeöffnung 61 aufweist, in die ein am Schlosselement 4 vorgesehener erster Schlosskopf 41 oder ein am Montagekörper 2 vorgesehener zweiter Schlosskopf 31 einführbar ist; die Halterung 1 von Figur 1 mit dem in einer zweiten Lage parallel zum Rahmenrohr 8 ausgerichteten Schlosselement 4 und dem auf den zweiten Schlosskopf 31 aufgesetzten Schloss 6;
- Fig. 3: die Halterung 1 von Figur 1 mit dem senkrecht zum Rahmenrohr 8 ausgerichteten Schlosselement 4, welches durch die Öffnung 91 in der Schale eines auf die Halterung 1 aufgesetzten Helms 9 hindurchgeführt ist und das mobile Schloss 6, das zur Befestigung des Helms 9 auf den am Schlosselement 4 vorgesehenen ersten Schlosskopf 41 aufgesetzt wird;
- Fig. 4: die Halterung 1 mit dem aufgesetzten Helm 9, der durch das Schloss 6 arretiert ist und mit einem Schlüssel 65, durch den das Schloss 6 wieder geöffnet und vom Schlosselement 4 gelöst werden kann;
- Fig. 5: den Montagekörper 2 von Figur 1 mit dem zweiten Schlosskopf 31 in Detailansicht;
- Fig. 6: den Montagekörper 2 von Figur 5 in Schnittdarstellung mit dem senkrecht zum Rahmenrohr 8 ausgerichteten Schlosselement 4;
- Fig. 7: den Montagekörper 2 von Figur 5 in Schnittdarstellung mit dem von einer Spiralfeder 252 parallel zum Rahmenrohr 8 gedrehten Schlosselement 4, welches durch das auf den zweiten Schlosskopf 31 aufgesetzte Schloss 6 fixiert ist;
- Fig. 8: ein vorzugsweise ausgestalteter Montagekörper 2 mit dem drehbar gehaltenen Schlosselement 4, das senkrecht zum Rahmenrohr 8 ausgerichtet ist;
- Fig. 9: der Montagekörper 2 von Figur 8 mit dem parallel zum Rahmenrohr 8 ausgerichteten und von Federelementen 25 gehaltenen Schlosselement 4; und
- Fig. 10: eine erfindungsgemässe Halterung 1, deren Montagekörper 2 mit einer Nutzvorrichtung 10 verbunden ist.

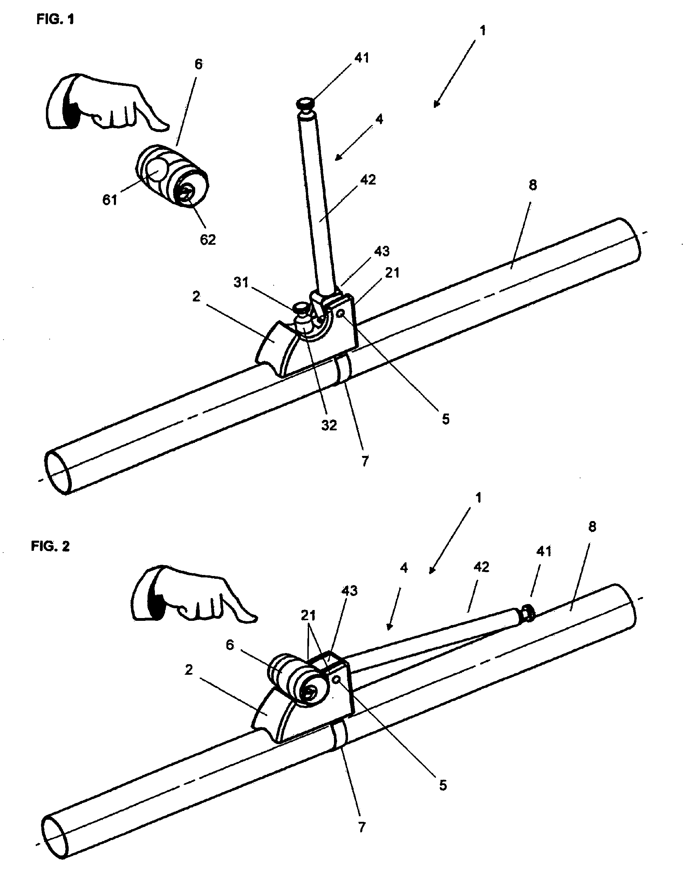

Figur 1 zeigt eine erfindungsgemässe Halterung 1 mit einem Montagekörper 2, der anhand eines Montagelements 7 an einem Rahmenrohr 8 eines Fahrrads befestigt ist. Das Montageelement 7 wird beispielsweise durch zwei miteinander verschraubbare Flanschelemente oder eine Metallklammer gebildet.

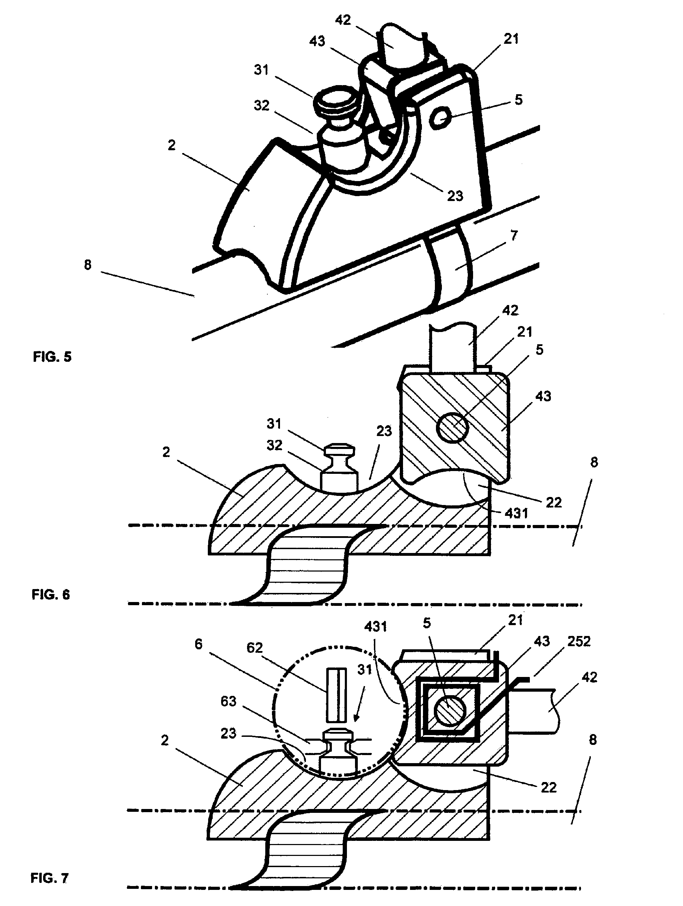

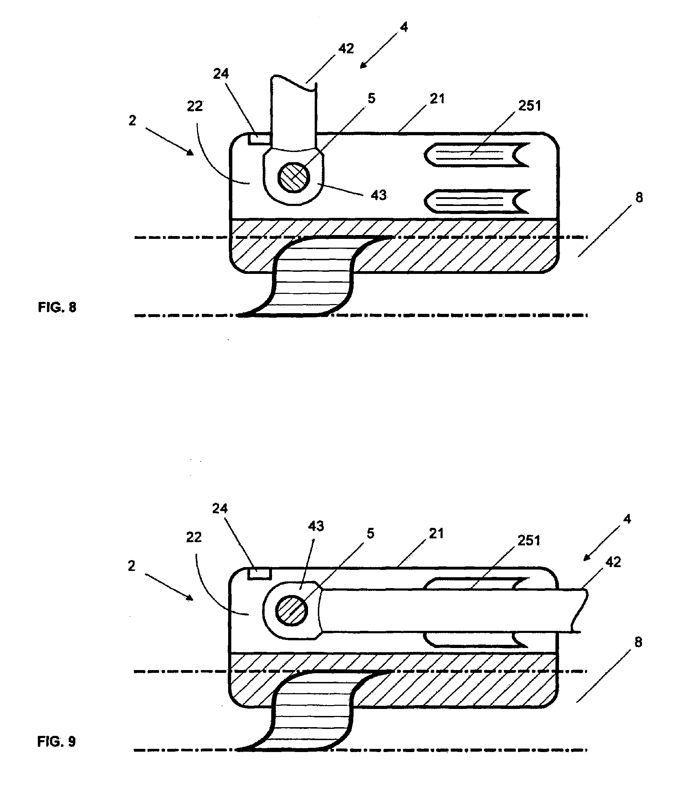

Der Montagekörper 2, der in Figur 5 in Detailansicht gezeigt ist, weist zwei Flügelelemente 21 auf, zwischen denen ein Lagerkörper 43 eines stabförmigen Schlosselements 4 mittels einer Lagerwelle 5 drehbar gehalten ist. Die Lagerwelle 5 ist senkrecht zum Rahmenrohr 8 ausgerichtet, weshalb das Schlosselement 4 in einer Ebene drehbar ist, in der auch das Rahmenrohr 8 liegt. Das Schlosselement 4 kann daher von einer ersten Lage, in der das Schlosselement 4 parallel am Rahmenrohr 8 anliegt, in eine vorzugsweise durch einen Endanschlag (siehe den Endanschlag 24 in Figur 8) definierte zweite Lage gedreht werden, in der das Schlosselement 4 senkrecht zum Rahmenrohr 8 ausgerichtet ist, wie dies in Figur 1 gezeigt ist.

Das Schlosselement 4 besteht nur aus einem Schenkel 42, beispielsweise einem Metallrohr, an dem an einem Ende der Lagerkörper 43 und am anderen Ende ein erster Schlosskopf 41 vorgesehen ist.

Auf dem vorzugsweise ausgestalteten Montagekörper 2 ist ferner ein zweiter Schlosskopf 31 vorgesehen, der mittels einer Schlosskopfhalterung 32, beispielsweise einem Rohrstück, annähernd senkrecht zum Rahmenrohr 8 gehalten ist.

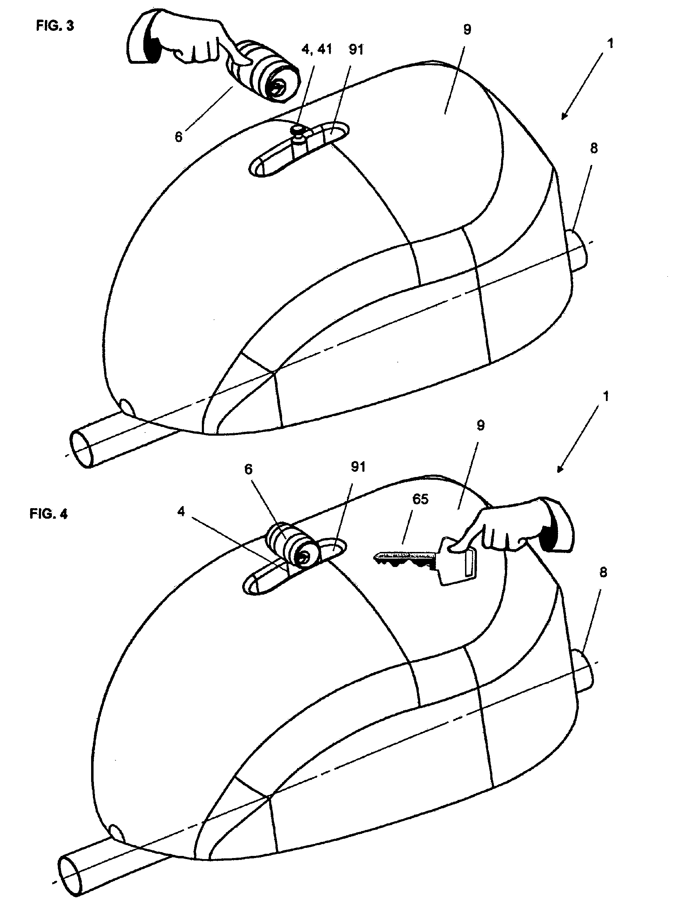

Ferner ist ein mobiles Schloss 6 gezeigt, welches annähernd die Form eines Zylinders aufweist, in dessen Mantelfläche eine Aufnahmeöffnung 61 vorgesehen ist, in die der erste oder zweite Schlosskopf 41, 31 einführbar ist. Seitlich, an der Grundfläche des Zylinders ist ein Schlüsselloch 62 vorgesehen, in das ein Schlüssel 65 (siehe Figur 4) einführbar ist, der zum Öffnen, vorzugsweise jedoch nicht zum Schliessen des Schlosses 6 benötigt wird. D.h., das Schloss 6 ist vorzugsweise als Schnappschloss ausgebildet, welches den ersten oder zweiten Schlosskopf 41, 32 automatisch erfasst und festhält.

Das Prinzip eines Schnappschlosses ist z.B. aus der DE 28 10 385 bekannt. Das dort beschriebene Schnappschloss besteht aus einem Schlossgehäuse und einem Schieber mit einer schwenkbar gelagerten Schliessnase, die so geformt ist, dass sie durch die Neigung zum Schliessblech nicht durch Zug aufgerissen werden kann. Die Schliessnase kann hingegen von aussen zurückgedrückt werden.

Im erfindungsgemässen Schloss 6 ist vorzugsweise ebenfalls wenigstens eine Schliessnase vorgesehen (siehe die in Figur 7 gezeigten Schliessnasen 63), welche vom eingeführten Schlosskopf 41 bzw. 31 zurückgedrängt werden kann, bis der Schlosskopf 41 bzw. 31 vollständig in die Aufnahmeöffnung 61 des Schlosses 6 eingetreten ist und die Schliessnase 63 wieder zurückfahren und den Schlosskopf 41 bzw. 31 einseitig umfassen kann. Sofern die Schliessnase 63 durch Federn gestützt und entsprechend, beispielsweise konisch, geformt ist, kann der Schlosskopf 41 bzw. 31 unter Krafteinwirkung wieder aus dem Schloss 6 gezogen werden. Sofern der Schlosskopf 41 bzw. 31 und die Schliessnase 63 hingegen ineinander verhakt sind, so muss die Schliessnase 63 beispielsweise mittels des Schlüssels 65 vom Schlosskopf 41 bzw. 31 gelöst werden. Die bevorzugte Funktion des Schlosses 6 kann vom Anwender gewählt werden. Beispielsweise wird ein erstes Schloss 6, durch das der Schlosskopf 41 bzw. 31 nur kraftschlüssig gehalten wird, und ein mit einem Schlüssel 65 bedienbares zweites Schloss 6, durch das der Schlosskopf 41 bzw. 31 formschlüssig gehalten wird, mit der Halterung 1 geliefert.

In dem in Figur 1 gezeigten Zustand der Halterung 1 ist das Schlosselement 4 senkrecht zum Rahmenrohr 8 ausgerichtet, so dass der Helm 9 darauf aufgesetzt werden kann, wie dies in Figur 3 gezeigt ist. Dort tritt das Schlosselement 4 mit dem ersten Schlosskopf 41 durch die Helmöffnung 91 des aufgesetzten Helms 9 hindurch, so dass dieser durch das Aufsetzen des Schlosses 6 auf den ersten Schlosskopf 41 arretiert werden kann, wie dies in Figur 4 gezeigt ist. Die Helmöffnung 91 ist schlitzartig ausgestaltet, weshalb der Helm 9 seitlich gegen das Schloss 6 verschoben und fixiert werden kann.

In der in Figur 4 gezeigten Ausgestaltung des Schlosses 6 wird dieses mittels des Schlüssels 65 wieder geöffnet und vom Schlosselement 4 gelöst, wonach der Helm 9 entfernt werden kann. Nach dem Entfernen des Helms 9 wird das Schlosselement 4, wie dies in Figur 2 gezeigt ist, um 90° gegen das Rahmenrohr 8 gedreht und das Schloss 6 auf den am Montagekörper 2 vorgesehenen zweiten Schlosskopf 31 aufgesetzt. In diesem Zustand fixiert das am Montagekörper 2 deponierte Schloss 6 gleichzeitig den formschlüssig daran anliegenden Lagerkörper 43 des Schlosselements 4, wie dies in Figur 7 gezeigt ist.

Die Figuren 6 und 7 zeigen in Schnittdarstellung den vorzugsweise ausgestalteten Montagekörper 2, der einen formschlüssig an das Schloss 6 angepassten Teilbereich 23 aufweist, in dem auch der zweite Schlosskopf 31 vorgesehen ist. Aus Figur 7 ist ersichtlich, dass das Schloss 6 praktisch formschlüssig an diesem Teilbereich 23 anliegt, nachdem es auf den zweiten Schlosskopf 31 aufgesetzt wurde. Ferner ist gezeigt, dass der von der Lagerwelle 5 gehaltene Lagerkörper 43 an dem dem ersten Schlosskopf 41 abgewandten unteren Ende ebenfalls einen formschlüssig an das Schloss 6 angepassten Bereich 431 aufweist.

In der in den Figuren 2 und 7 gezeigten Lage wird das Schlosselement 4 somit vom deponierten Schloss 6 gehalten. Es werden daher zwei Probleme gleichzeitig gelöst. Einerseits wird das zur Befestigung des Helms 9 momentan nicht benötigte Schloss 6 deponiert, so dass es nicht getragen werden muss und nicht verloren gehen oder gestohlen werden kann. Andererseits wird das zur Befestigung des Helms 9 momentan nicht benötigte Schlosselement 4 in seiner passiven Lage parallel zum Rahmenrohr 8 fixiert. Das Abschlusselement 4 kann daher erst nach dem Entfernen des Schlosses 6 wieder senkrecht zum Rahmenrohr 8 ausgerichtet werden. Der gesamte Vorgang kann daher innerhalb weniger Sekunden bequem vollzogen werden.

Figur 7 zeigt ferner eine Spiralfeder 252, die einerseits am Montagekörper 2 und andererseits am Schlosselement 4 anliegt und dieses gegen das Rahmenrohr 8 drückt. Nach dem Lösen des Helms 9 vom Schlosselement 4 kippt dieses daher automatisch nach oben (gegebenenfalls nach unten) gegen das Rahmenrohr 8. Sofern die Spiralfeder 252 umgekehrt montiert wird, so drückt sie das Abschlusselement 4, nach dem Entfernen des Schlosses 6 vom zweiten Schlosskopf 31, automatisch in die Lage senkrecht zum Rahmenrohr 8. Diese letztere Ausgestaltung reduziert den Befestigungsvorgang des Helms 9 auf drei Schritte. Im ersten Schritt wird das Schloss 6 vom zweiten Schlosskopf 31 gelöst. Im zweiten Schritt wird der Helm 9 auf das von der Spiralfeder 252 automatisch nach unten gedrehte Schlosselement 4 aufgesetzt und im dritten Schritt wird das Schloss 6 auf den ersten Schlosskopf 41 aufgesetzt.

In den Figuren 1 und 6 ist das Schlosselement 4 in der Lage senkrecht zum Rahmenrohr 8 gezeigt. In Figur 6 sind die an das Schloss 6 angepassten Bereiche 23 bzw. 431 des Montagekörpers 2 und des Lagekörpers 43, der zwischen den beiden Flügeln 21 in einer Ausnehmung 22 des Montagekörpers 2 von der Lagerwelle 5 gehaltene ist, gut ersichtlich.

In den Figuren 8 und 9 ist in Schnittdarstellung ein vorzugsweise ausgestalteter Montagekörper 2 gezeigt, der nicht mit einem zweiten Schlosskopf versehen ist. Ein derartiger Montagekörper 2 wird dann verwendet, wenn das Schloss 6 vom Anwender permanent getragen und beispielsweise als Schlüsselanhänger verwendet wird. Zwischen den beiden Flügeln 21, ist wiederum eine Ausnehmung 22 vorgesehen, innerhalb der die Lagerwelle 5 mit dem Lagerkörper 43 des Schlosselements 4 verbunden ist. Ferner sind in der Ausnehmung 22 ein Endanschlag 24, der die Auslenkung des Schlosselements 4 begrenzt, und Federelemente 251 vorgesehen, die das Schlosselement 4 in der Lage parallel zum Rahmenrohr 8 halten (siehe Figur 9). In dieser Ausgestaltung wird das Schlosselement 4 zumindest in der passiven Lage durch die Federelemente 251 kraftschlüssig gehalten. In bevorzugten Ausgestaltungen wird das Schlosselement 4 jedoch sowohl in der aktiven, als auch in der passiven Lage vorzugsweise mittels Federelementen aus Metall oder Kunststoff, beispielsweise mittels gebogenen Blattfedern 251, gehalten. Auf diese Weise werden die jeweils gewünschten Positionen des Schlosselements 4 definiert und können problemlos eingestellt werden. Der zusätzliche Einsatz einer Feder, mittels der das Schlosselement 4 automatisch in die erste oder zweite Lage gedreht wird, ist ebenfalls möglich. Die ersten und zweiten Federelemente 251, 252 sowie der Endanschlag 24 in der ersten und/oder zweite Lage werden bedarfsweise eingesetzt und miteinander kombiniert.

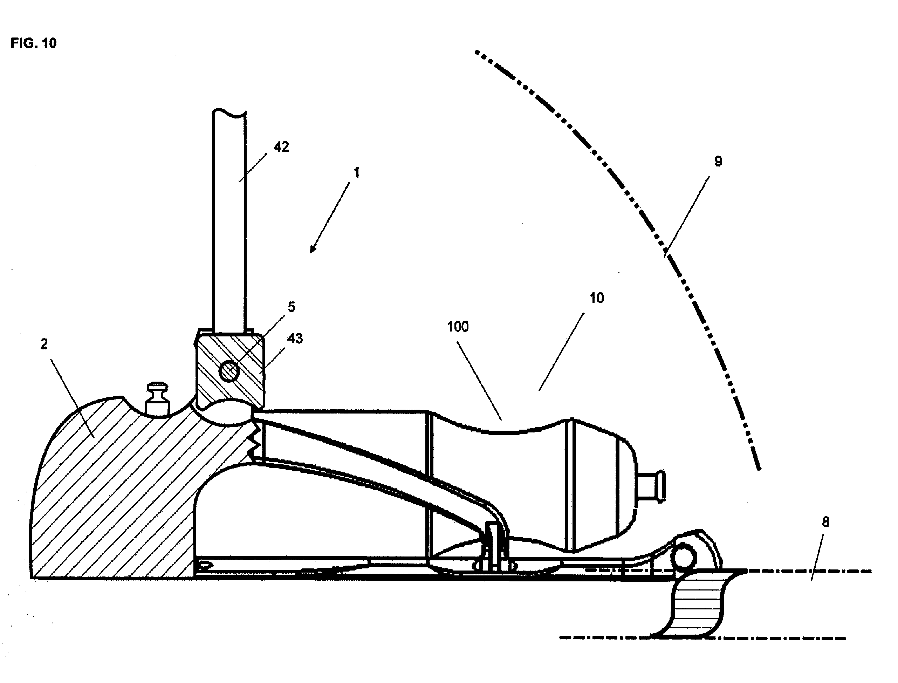

Figur 10 zeigt eine erfindungsgemässe Halterung 1, deren Montagekörper 2 mit einer Nutzvorrichtung 10, nämlich einer Halterung 10 für eine Flasche 100 verbunden ist. Ferner ist der erfindungsgemäss montierte Helm 9 schematisch gezeigt, mittels dessen die mit dem Rahmen 8 des Fahrrads verbundene Flaschenhalterung 10 zumindest teilweise derart abgedeckt ist, dass die Flasche 100 nicht mehr entnommen werden kann und gegen Diebstahl geschützt ist.

Der Montagekörper 2 der erfindungsgemässen Vorrichtung 1 und die Flaschenhalterung 10 können entweder einstückig oder lösbar, z.B. mittels Verbindungselementen, wie Schrauben und Schraubenmuttern, miteinander verbunden sein. Dabei wird entweder der Montagekörper 2 der erfindungsgemässen Halterung 1 oder, wie in Figur 5 gezeigt, die Flaschenhalterung 10 mit dem Rahmen 8 des Fahrrads verbunden. Die erfindungsgemässe Halterung 1 kann mit verschiedenartigen Nutzvorrichtungen 10 verbunden werden, die beispielsweise zur Speicherung von Utensilien oder Lebensmitteln vorgesehen sind.

### Referenzliste

- 1: Halterung
- 10: Nutzvorrichtung, wie Flaschenhalterung
- 100: Flasche
- 2: Montagekörper
- 21: Flügelelemente
- 22: Ausnehmung im Montagekörper 2
- 23: Teilbereich am Montagekörper 2
- 24: Endanschlag
- 251: erste Federelemente
- 252: zweites Federelement, vorzugsweise Spiralfeder
- 31: zweiter Schlosskopf, am Montagekörper 2 vorgesehen
- 32: Schlosskopfhalterung
- 4: Schlosselement
- 41: erster Schlosskopf, am Schlosselement 4 vorgesehen
- 42: Schenkel des Schlosselements 4
- 43: Lagerkörper des Schlosselements 4
- 431: Endbereich am Lagerkörper 43
- 5: Lagerwelle
- 6: Schloss
- 61: Aufnahmeöffnung
- 62: Schlüsselloch
- 63: Schliessnase
- 65: Schlüssel
- 7: Montageelement
- 8: Rahmenrohr
- 9: Helm
- 91: Helmöffnung

## Patentansprüche

1. Halterung (1) für ein Fahrrad zur Befestigung eines Helms (9), der eine Helmöffnung (91) aufweist, durch die hindurch ein Schlosselement (4) führbar ist, welches mit einem ersten Schlosskopf (41) versehen ist, der zur Sicherung des Helms (9) in ein Schloss (6) einführbar ist, **dadurch gekennzeichnet, dass** ein direkt oder indirekt mit einem Rahmenrohr (8) des Fahrrads verbindbarer Montagekörper (2) vorgesehen ist, der mit dem stabförmigen und nur aus einem Schenkel (42) bestehenden Schlosselement (4) derart gelenkig verbunden ist, dass das Schlosselement (4) zumindest annähernd parallel sowie zumindest annähernd senkrecht zum Rahmenrohr (8) ausrichtbar ist, und dass das Schloss (6) mobil und mit einer Aufnahmeöffnung (61) versehen ist, in die der am freien Ende des Schlosselements (4) vorgesehene erste Schlosskopf (41) einführbar ist.

2. Halterung (1) nach Anspruch 1, **dadurch gekennzeichnet, dass** innerhalb der Aufnahmeöffnung (61) des Schlosses (6) wenigstens eine elastisch gelagerte Schliessnase (63) vorgesehen sind, mittels der der eingeführte erste Schlosskopf (41) automatisch arretierbar ist.

3. Halterung (1) nach Anspruch 1 oder 2, **dadurch gekennzeichnet, dass** das Schloss (4) mittels eines Schlüssels (65) abschliessbar ist.

4. Halterung (1) nach Anspruch 1, 2 oder 3, **dadurch gekennzeichnet, dass** das Schloss (4) zumindest annähernd zylindrisch oder fassförmig ausgestaltet ist, wobei die Aufnahmeöffnung (61) vorzugsweise zentral in der Mantelfläche und das Schlüsselloch (62) in einer der Grundflächen vorgesehen ist.

5. Halterung (1) nach einem der Ansprüche 1-4, **dadurch gekennzeichnet, dass** wenigstens ein erstes Federelement (251) vorgesehen ist, mittels dessen das Schlosselement (4) in der ersten Lage parallel und/oder der zweiten Lage senkrecht zum Rahmenrohr (8) fixierbar ist.

6. Halterung (1) nach einem der Ansprüche 1-5, **dadurch gekennzeichnet, dass** ein zweites Federelement (252), vorzugsweise eine Spiralfeder, vorgesehen ist, mittels dessen Federkraft das Schlosselement (4) in die erste Lage parallel oder in die zweite Lage senkrecht zum Rahmenrohr (8) führbar ist.

7. Halterung (1) nach einem der Ansprüche 1-6, **dadurch gekennzeichnet, dass** der Montagekörper (2) zwei Flügelelemente (21) aufweist, die eine senkrecht zum Rahmenrohr (8) ausgerichtete Lagerwelle (5) halten, mittels der das Schlosselement (4) gelenkig gehalten ist.

8. Halterung (1) nach einem der Ansprüche 1-7, **dadurch gekennzeichnet, dass** der Montagekörper (2) mit einem zweiten Schlosskopf (31) versehen ist, auf den das Schloss (4) aufsetzbar ist, wenn der Helm (9) entnommen wurde.

9. Halterung (1) nach einem der Ansprüche 1-8, **dadurch gekennzeichnet, dass** der Bereich (23) des Montagekörpers (2), in dem der zweite Schlosskopf (31) gehalten ist, formschlüssig an das Schloss (4) angepasst ist, so dass dieses nach der Befestigung praktisch spielfrei gehalten ist.

10. Halterung (1) nach einem der Ansprüche 1-9, **dadurch gekennzeichnet, dass** das Schlosselement (4) an dem dem ersten Schlosskopf (41) gegenüberliegenden Ende mit einem der Aufnahme der Lagerwelle (5) dienenden Lagerkörper (43) versehen ist, dessen dem ersten Schlosskopf (41) abgewandter Endbereich formschlüssig an das Schloss (4) angepasst und derart dimensioniert ist, dass das Schlosselement (4) in der Lage parallel zum Rahmenrohr (8) durch das auf den Montagekörper (2) aufgesetzte Schloss (4) gehalten ist.

11. Halterung (1) nach einem der Ansprüche 1-10, **dadurch gekennzeichnet, dass** der Montagekörper (2) fest oder lösbar mit einer am Rahmenrohr (8) befestigten Nutzvorrichtung (10), gegebenenfalls mit einer Flaschenhalterung oder mit einer Speichervorrichtung, verbunden ist.

12. Halterung (1) nach Anspruch 11, **dadurch gekennzeichnet, dass** der Helm (9) derart montierbar ist, dass nach dessen Montage die Nutzvorrichtung (10) abgeschlossen ist oder die darin gehaltenen Sachen geschützt sind.

## Claims

1. Support (1) for a bicycle for the attachment of a helmet (9) that comprises a helmet opening (91), through which a lock element (4) is guidable, which is provided with a first lock head (41), which is insertable into a lock (6) in order to fix the helmet (9), **characterised in that** a mounting body (2) is provided, which directly or indirectly is attachable to a crossbar (8) of the bicycle and which in such a way is pivotally connected to the lock element (4), which is rod-shaped and consists of one leg (42) only, that the lock element (4) is alignable at least approximately parallel as well as at least approximately vertical to the crossbar (8), and that the lock (6) is mobile and provided with a receiving opening (61), into which the first lock head (41), that is provided at the free end of the lock element (4), is insertable.

2. Support (1) according to claim 1, **characterised in that** at least one elastically supported locking nose (63) is provided within receiving opening (61) of the lock (6), with which the first lock head (41) is automatically lockable.

3. Support (1) according to claim 1 or 2, **characterised in that** the lock (4) is lockable (65) by means of a key (65).

4. Support (1) according to claim 1, 2 or 3, **characterised in that** the lock (4) is designed at least approximately in the form of a cylinder or a drum, wherein the receiving opening (61) is arranged preferably centrally in the lateral area and the key hole in one of the base areas.

5. Support (1) according to one of the claims 1-4, **characterised in that** at least one elastic element (251) is provided, with which the lock element (4) is fixable in the first position parallel and/or in the second position perpendicular to the crossbar (8).

6. Support (1) according to one of the claims 1-5, **characterised in that** a second elastic element (252), preferably a spiral spring, is provided, by means of whose elastic force the lock element (4) is guidable into the first position parallel or into the second position perpendicular to the crossbar (8).

7. Support (1) according to one of the claims 1-6, **characterised in that** the mounting body (2) comprises two wing elements (21), which hold a bearing shaft, with which the lock element (4) is pivotally held.

8. Support (1) according to one of the claims 1-7, **characterised in that** the mounting body (2) is provided wit a second lock head (31), onto which the lock (4) is mountable, when the helmet (9) had been removed.

9. Support (1) according to one of the claims 1-8, **characterised in that** the section (23) of the mounting body (2), in which the second lock head (31) is held, is adapted form-locking to the lock (4), so that the lock (4), after it has been mounted, is held practically without play.

10. Support (1) according to one of the claims 1-9, **characterised in that** the lock element (4), at the end opposite the first lock head (41), is provided with a bearing body (43), which serves for receiving the bearing shaft (5) and whose end section, that is averted from the first lock head (41), is adapted form-locking to the lock (4) and is dimensioned in such a way, that the lock element (4), in the position parallel to the crossbar (8), is held by the lock (4) mounted on the mounting body (2).

11. Support (1) according to one of the claims 1-10, **characterised in that** the mounting body (2) is connected fixedly or releasable with a utilizable device (10) mounted on the crossbar (8), if appropriate with a bottle holder or a storage device.

12. Support (1) according to claim 11, **characterised in that** the helmet (9) is mountable in such a way, that after it has been mounted the utilizable device (10) is closed or the goods therein are protected.

## Revendications

1. Support (1) pour un vélo pour la fixation d'un casque (9) qui présente une ouverture de casque (91) à travers laquelle peut être guidé un élément de cadenas (4) qui est muni d'une première tête de cadenas (41) qui est insérable dans un cadenas (6) pour fixer le casque (9), **caractérisé en ce qu'**il est prévu un corps de montage (2) reliable directement ou indirectement à un tube de cadre (8) du vélo, corps qui est relié de manière articulée à l'élément de cadenas (4) en forme de barre composé uniquement d'une branche (42), de sorte que l'élément de cadenas (4) peut être orienté au moins approximativement parallèlement ainsi qu'au moins perpendiculairement au tube de cadre (8) et **en ce que** le cadenas (6) est mobile et est muni d'une ouverture de logement (61) dans laquelle peut être introduite la première tête de cadenas. (41) prévue sur l'extrémité libre de l'élément de cadenas (4).

2. Support (1) selon la revendication 1, **caractérisé en ce qu'**à l'intérieur de l'ouverture de logement (61) du cadenas (6), il est au moins prévu un ergot de fermeture (63) logé de manière élastique au moyen duquel la première tête de cadenas (41) insérée est arrêtée automatiquement.

3. Support (1) selon la revendication 1 ou 2, **caractérisé en ce que** le cadenas (4) peut être verrouillé au moyen d'une clé (65).

4. Support (1) selon la revendication 1, 2 ou 3, **caractérisé en ce que** le cadenas (4) est réalisé au moins approximativement de forme cylindrique ou en forme de baril, l'ouverture de logement (61) étant prévue de préférence centralement dans la surface d'enveloppe et le trou de clé (62) dans l'une des surfaces de base.

5. Support (1) selon l'une des revendications 1 à 4, **caractérisé en ce qu'**il est prévu au moins un premier élément ressort (251) au moyen duquel l'élément de cadenas (4) peut être fixé parallèlement dans la première position et/ou dans la seconde position perpendiculairement au tube de cadre (8).

6. Support (1) selon l'une des revendications 1 à 5, **caractérisé en ce qu'**il est prévu au moins un second élément ressort (252) de préférence un ressort spiralé au moyen de la force ressort duquel l'élément de cadenas (4) peut être amené dans la première position parallèlement ou dans la seconde position perpendiculairement au tube de cadre (8).

7. Support (1) selon l'une des revendications 1 à 6, **caractérisé en ce que** le corps de montage (2) présente deux éléments d'aile (21) qui maintiennent un arbre de palier (5) orienté perpendiculairement au tube de cadre (8), arbre au moyen duquel l'élément de cadenas (4) est maintenu articulé.

8. Support (1) selon l'une des revendications 1 à 7, **caractérisé en ce que** le corps de montage (2) est muni d'une seconde tête de cadenas (31) sur laquelle peut être placé le cadenas (4) quand le casque (9) est retiré.

9. Support (1) selon l'une des revendications 1 à 8, **caractérisé en ce que** la zone (23) du corps de montage (2), dans lequel est maintenue la seconde tête de cadenas (31), est ajustée par adhérence des formes au cadenas (4) de sorte que celui-ci est maintenu pratiquement sans jeu après la fixation.

10. Support (1) selon l'une des revendications 1 à 9, **caractérisé en ce que** l'élément de cadenas (4) est muni sur l'extrémité opposée à la première tête de cadenas (41) d'un corps de palier (43) servant au logement de l'arbre de palier (5), corps dont la zone d'extrémité opposée à la première tête de cadenas (41) est ajustée par adhérence de forme au cadenas (4) et est dimensionnée de sorte que l'élément de cadenas (4) est maintenu dans la position parallèlement au cadre de tube (8) par le cadenas (4) placé sur le corps de montage (2).

11. Support (1), selon l'une des revendications 1 à 10, **caractérisé en ce que** le corps de montage (2) est relié fixement ou de manière amovible à un dispositif utilitaire (10) fixé sur le tube de cadre (8) le cas échéant à un porte-bouteille ou un dispositif de rangement.

12. Support (1) selon la revendication 11, **caractérisé en ce que** le casque (9) peut être monté de sorte qu'après son montage, le dispositif utilitaire (10) est fermé ou les affaires s'y trouvant sont protégées.
